# FASCICULE DE BREVET EUROPEEN

(11) **EP 1 348 594 B1**
(45) Date de publication et mention de la délivrance du brevet: **14.09.2005**
(21) Numéro de dépôt: 03290681.0
(22) Date de dépôt: 18.03.2003
(51) Int. Cl.: B60Q 1/12, F21V 14/04, F21V 5/00

(54) **Projecteur d'éclairage équipé d'un réflecteur elliptique pivotant et d'une lentille fixe pour la réalisation d'un faisceau de virage**
Kfz-Scheinwerfer mit einem schwenkbaren, elliptischen Reflektor und einer fixen Linse zur Erzeugung eines Kurvenlichtbündels
Vehicle headlamp comprising a pivoting elliptical reflector and a fixed lens capable of generating a cornering beam

(30) Priorité: 28.03.2002 FR 0203935
(43) Date de publication de la demande: 01.10.2003
(73) Titulaire: VALEO VISION, 93012 Bobigny Cédex (FR)
(72) Inventeur: De Lamberterie, Antoine, 75019 Paris (FR); Tourenq, Jean-Matthieu, 75014 Paris (FR)

(56) Documents cités:
- FR-A- 1 536 280
- FR-A- 2 772 882
- FR-A- 2 776 366
- US-A- 5 412 543
- US-B1- 6 309 094

## Description

La présente invention concerne un projecteur d'éclairage de véhicule automobile.

La présente invention concerne plus particulièrement un projecteur d'éclairage de véhicule automobile qui est conçu pour réaliser au moins un faisceau d'éclairage dit de virage en vue d'améliorer l'éclairage lorsque le véhicule aborde un virage, du type comportant un système optique qui comprend, agencés d'arrière en avant globalement suivant un axe longitudinal horizontal de référence, un réflecteur du type elliptique, une source lumineuse agencée au voisinage d'un premier foyer du réflecteur, et un élément de lentille convergente, du type dans lequel au moins le réflecteur et la source lumineuse sont montés pivotants autour d'un axe sensiblement vertical, par rapport à un support fixe du véhicule, en fonction de l'angle de braquage des roues directrices du véhicule, définissant ainsi un axe optique mobile par rapport à l'axe longitudinal. Un tel projecteur est connu du document US-BI-6 309 094.

On connaît déjà des projecteurs d'éclairage, notamment du type elliptique ou à surfaces complexes, qui permettent d'améliorer l'éclairage en virage. Généralement, ce type de projecteur comporte un ensemble pivotant constitué d'un réflecteur elliptique, d'une source lumineuse, d'un cache et d'une lentille convergente.

Le faisceau de virage est prévu pour être combiné à un faisceau réglementaire de feux de croisement, ou faisceau de croisement.

Le faisceau de virage réalisé par le projecteur décrit précédemment n'est pas satisfaisant car il n'évolue pas en fonction de l'angle de braquage. La prestation offerte par le projecteur de virage s'apparente à un faisceau de « lampe de poche » que l'on oriente plus ou moins dans la direction du virage.

Un inconvénient de ce type de faisceau de virage est la présence de « trous » de lumière sur la route devant le véhicule, c'est à dire des zones de moindre éclairage entre le faisceau de croisement et le faisceau de virage, pour des angles de virage supérieurs à vingt-cinq degrés.

L'encombrement de ce type de projecteur est pénalisant car le volume balayé par l'ensemble pivotant est très important.

De plus, les contraintes mécaniques portant sur le projecteur sont importantes étant donné qu'il y a beaucoup de pièces en mouvement.

Le nombre important de pièces en mouvement est aussi une source de difficultés pour l'ajustement des pièces entre elles et pour l'agencement du projecteur dans un bloc optique du véhicule.

Un autre inconvénient est le coût de ce type de projecteur.

L'invention vise à remédier à ces inconvénients.

Dans ce but, l'invention propose un projecteur d'éclairage du type décrit précédemment, caractérisé en ce que l'élément de lentille comporte une partie dite latérale, qui est agencée à côté de l'axe longitudinal, dans un secteur angulaire susceptible d'être balayé par l'axe optique mobile, et qui est conçue pour provoquer une modification du faisceau de virage en fonction de l'angle de virage que forme l'axe optique mobile avec l'axe longitudinal.

Grâce au projecteur selon l'invention, le faisceau de virage évolue en fonction de l'angle de braquage, de sorte que le faisceau de virage obtenu présente une certaine continuité avec le faisceau de croisement, et de sorte que le faisceau de virage présente une répartition lumineuse plus homogène, notamment pour des angles de virage compris entre dix et soixante degrés.

De plus, le projecteur selon l'invention permet de diminuer le nombre de pièces en mouvement, ce qui diminue les contraintes mécaniques supportées par le projecteur.

Selon une caractéristique additionnelle du projecteur selon l'invention, l'élément de lentille comporte une partie frontale adjacente à la partie latérale, dont l'axe optique est sensiblement parallèle à l'axe longitudinal et dont le plan focal est situé au voisinage du second foyer du réflecteur, lorsque le réflecteur occupe sa position angulaire de repos, dans laquelle l'axe optique mobile est sensiblement confondu avec l'axe longitudinal, de manière que le projecteur puisse réaliser au moins un faisceau d'éclairage additionnel réglementaire, par exemple un faisceau d'éclairage pour la circulation sur autoroute, lorsque le réflecteur occupe sa position de repos.

Ainsi, le projecteur selon l'invention permet de réaliser au moins une fonction supplémentaire, ce qui est avantageux, notamment en termes de coûts et d'encombrement de l'ensemble des éléments d'éclairage équipant le véhicule.

Selon d'autres caractéristiques de l'invention :
- la partie latérale de l'élément de lentille comporte une portion latérale d'extrémité dont l'axe optique forme avec l'axe longitudinal un angle déterminé qui est sensiblement égal à l'angle de virage maximal ;
- la partie latérale de l'élément de lentille comporte au moins une portion intermédiaire qui est adjacente à la portion latérale d'extrémité et dont le profil convexe, en section par un plan vertical, évolue angulairement le long de la partie latérale, de manière que la largeur du faisceau de virage augmente progressivement avec l'augmentation de l'angle de virage, depuis la position de repos ;
- la partie frontale de l'élément de lentille est une lentille semi-cylindrique d'axe sensiblement horizontal et la portion latérale d'extrémité de la partie latérale est une portion de lentille du type sphérique ;
- le réflecteur comporte une génératrice horizontale sensiblement parabolique et une génératrice verticale sensiblement elliptique ;
- la partie frontale de l'élément de lentille est une portion de lentille du type sphérique et la portion latérale d'extrémité de la partie latérale est une lentille semi-cylindrique d'axe sensiblement horizontal ;
- le projecteur comporte un cache fixe qui est agencé longitudinalement entre le réflecteur et l'élément de lentille, et qui comprend :
   - une partie frontale qui est sensiblement orthogonale à l'axe longitudinal et qui est agencée globalement dans le plan focal de la partie frontale de l'élément de lentille ; et
   - une partie latérale qui est conformée de manière qu'elle soit sensiblement orthogonale à au moins un axe optique de la partie latérale de l'élément de lentille.
- le cache comporte une partie supérieure qui est agencée globalement dans le plan focal de la partie frontale de l'élément de lentille, et qui délimite avec la partie frontale du cache une fenêtre de passage des rayons lumineux, de manière à diminuer la lumière proche émise par le projecteur sur la route, lorsque le réflecteur occupe sa position angulaire de repos ;
- la partie frontale et la partie latérale du cache sont formées chacune par deux plaques globalement rectangulaires et parallèles, alignées longitudinalement.

D'autres caractéristiques et avantages de l'invention apparaîtront à la lecture de la description détaillée qui suit pour la compréhension de laquelle on se reportera aux dessins annexés parmi lesquels :
- la figure 1 est une vue de dessus qui représente schématiquement un véhicule équipé d'un système d'éclairage conforme aux enseignements de l'invention ;
- la figure 2 est une vue en perspective qui représente schématiquement le projecteur additionnel du bloc optique droit du véhicule de la figure 1 ;
- la figure 3 est une vue de dessus qui représente schématiquement le projecteur additionnel de la figure 2 ;
- la figure 4 est un schéma qui représente, sous la forme de courbes isolux, le faisceau d'autoroute réalisé par le projecteur additionnel de la figure 2, lorsque le réflecteur occupe sa position angulaire de repos ;
- la figure 5 est un schéma similaire à celui de la figure 4 qui représente le faisceau de virage réalisé par le projecteur additionnel de la figure 2, lorsque le réflecteur forme un angle de virage de vingt degrés par rapport à un axe longitudinal de référence ;
- la figure 6 est un schéma similaire à celui de la figure 4 qui représente le faisceau de virage réalisé par le projecteur additionnel de la figure 2, lorsque le réflecteur forme un angle de virage de quarante degrés par rapport à l'axe longitudinal de référence ;
- la figure 7 est une vue en coupe axiale partielle suivant le plan de coupe 7-7 qui représente schématiquement le fonctionnement du projecteur additionnel de la figure 2, lorsque le réflecteur occupe sa position angulaire de repos ;
- la figure 8 est une vue similaire à celle de la figure 7 qui représente schématiquement le fonctionnement d'une variante de réalisation du projecteur additionnel conforme aux enseignements de l'invention, lorsque le réflecteur occupe sa position angulaire de repos.

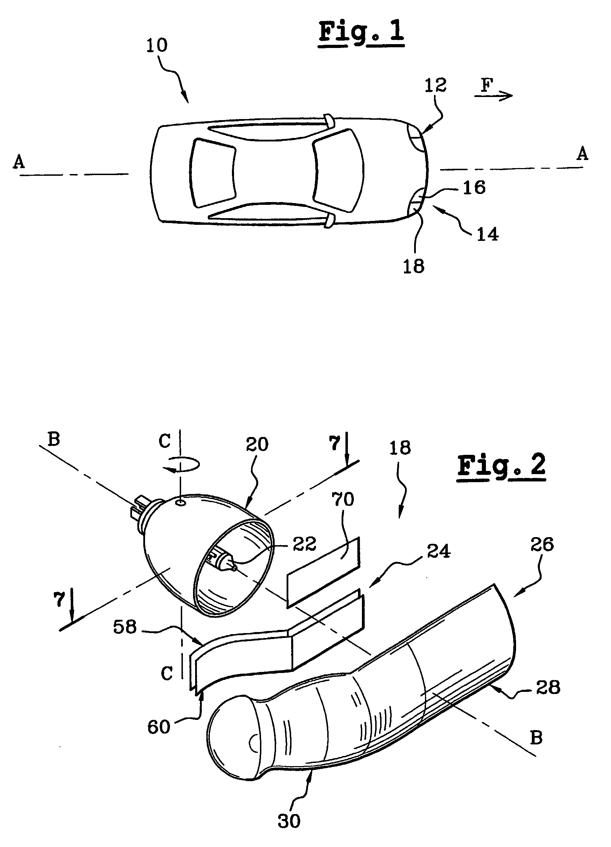

Sur la figure 1, on a représenté un véhicule automobile 10 équipé à l'avant de deux blocs optiques d'éclairage, respectivement gauche 12 et droit 14.

Dans la suite de la description, on utilisera à titre non limitatif une orientation d'arrière en avant, suivant l'axe longitudinal A-A du véhicule 10, qui correspond à une orientation de gauche à droite en considérant la figure 1.

Chaque bloc optique 12, 14 comporte ici un projecteur principal 16 qui est conçu pour réaliser un faisceau d'éclairage réglementaire du type feu de croisement Fc, et un projecteur additionnel 18, qui est réalisé conformément aux enseignement de l'invention, et qui est conçu pour réaliser notamment un faisceau d'éclairage réglementaire du type feu de virage, qui sera appelé faisceau de virage Fv.

Dans la suite de la description, on décrira l'invention appliquée au projecteur additionnel 18 du bloc optique d'éclairage droit 14, étant bien entendu que les éléments du bloc optique gauche 12 sont agencés de manière globalement symétrique à ceux du bloc optique droit 14, par rapport à un plan de symétrie vertical passant par l'axe A-A du véhicule 10.

Les principaux éléments constituant le projecteur additionnel 18 ont été représentés schématiquement sur la figure 2.

Le projecteur additionnel 18 est un projecteur du type à reproduction d'image lumineuse, généralement appelé projecteur du type elliptique.

Le système optique du projecteur additionnel 18 comporte donc, agencés d'arrière en avant globalement suivant un axe longitudinal horizontal de référence B-B qui est parallèle à l'axe A-A du véhicule 10, un réflecteur du type elliptique 20, une source lumineuse 22 agencée au voisinage d'un premier foyer du réflecteur 20, un cache 24 et un élément de lentille convergente 26.

Dans le mode de réalisation représenté ici, le réflecteur 20 comporte une génératrice horizontale sensiblement parabolique et une génératrice verticale sensiblement elliptique.

Conformément aux enseignements de l'invention, seuls le réflecteur 20 et la source lumineuse 22 sont montés pivotants autour d'un axe sensiblement vertical C-C, par rapport à un support fixe (non représenté) du véhicule 10, en fonction de l'angle de braquage des roues directrices du véhicule 10.

Le cache 24 et l'élément de lentille 26 sont donc fixes.

Le réflecteur 20 et la source 22 définissent donc un axe optique mobile D-D par rapport à l'axe longitudinal B-B.

L'axe optique mobile D-D est ici sensiblement horizontal et il peut être défini par exemple par les deux foyers du réflecteur elliptique 20.

Sur la figure 2, le réflecteur 20 occupe une position angulaire de repos dans laquelle l'axe optique mobile D-D est confondu avec l'axe longitudinal de référence B-B.

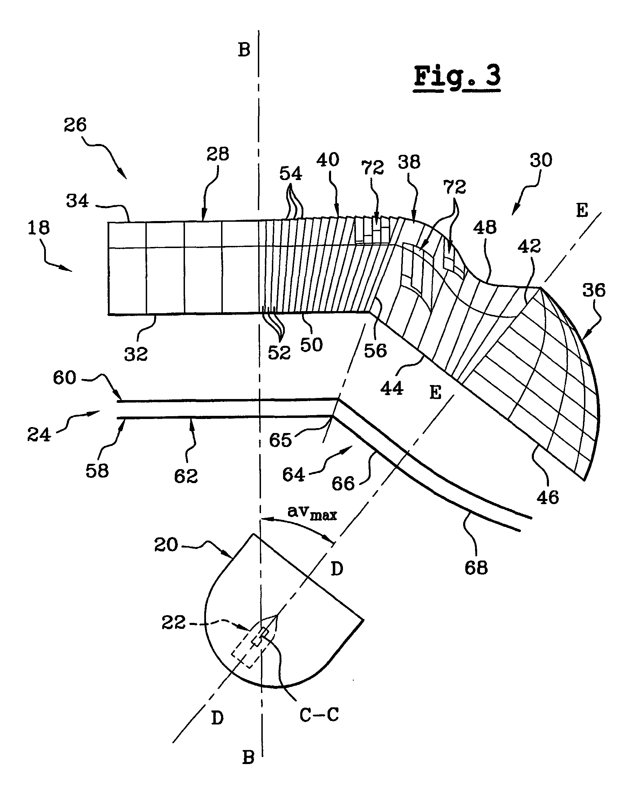

Lorsque le réflecteur 20 pivote, dans le sens horaire en considérant la figure 3, l'axe optique mobile D-D forme avec l'axe longitudinal de référence B-B un angle dit de virage av.

On décrira maintenant la forme particulière de l'élément de lentille 26, en référence notamment aux figures 2 et 3.

Avantageusement, la forme de l'élément de lentille 26 est obtenue et optimisée par des simulations, notamment à l'aide d'outils informatiques.

Pour des raisons de facilité de fabrication, on a choisi ici de réaliser l'élément de lentille 26 avec des faces arrière d'entrée 32, 44, 46, 50, c'est à dire les faces agencées du côté de la source lumineuse 22, qui sont planes.

Selon des variantes de réalisation (non représentées), les faces arrière d'entrée 32, 44, 46, 50 pourraient aussi être de formes quelconques, cylindriques ou sphériques.

Selon le mode de réalisation représenté ici, l'élément de lentille 26 comporte :
- une partie dite frontale 28, qui est adjacente au côté gauche de l'axe longitudinal B-B ;
- une partie dite latérale 30, qui est adjacente au côté droit de l'axe longitudinal B-B, et qui est agencée dans un secteur angulaire susceptible d'être balayé par l'axe optique mobile D-D.

La partie frontale 28 est conçue pour permettre au projecteur additionnel 18 de réaliser au moins un faisceau d'éclairage additionnel réglementaire, par exemple un faisceau d'éclairage pour la circulation sur autoroute, ou faisceau d'autoroute Fa, lorsque le réflecteur 20 occupe sa position angulaire de repos.

Pour réaliser le faisceau d'autoroute Fa on cherche à regrouper les rayons lumineux dans l'axe longitudinal B-B.

L'axe optique de la partie frontale 28 est parallèle à l'axe longitudinal de référence B-B, et son plan focal est situé au voisinage du second foyer du réflecteur 20, lorsque le réflecteur 20 occupe sa position angulaire de repos.

La partie frontale 28 est réalisée ici sous la forme d'une lentille plan convexe semi-cylindrique, c'est à dire que la partie frontale forme un demi-cylindre d'axe horizontal et perpendiculaire à l'axe longitudinal B-B.

Lorsque le réflecteur 20 occupe sa position de repos, les rayons lumineux émis par la source 22 pénètrent dans la partie frontale 28 par sa face arrière plane 32, qui est globalement orthogonale à l'axe longitudinal B-B, et ils sortent par sa face cylindrique convexe 34.

La partie latérale 30 est conçue pour provoquer une modification du faisceau de virage Fv en fonction de l'angle de virage av que forme l'axe optique mobile D-D avec l'axe longitudinal B-B.

Plus particulièrement, la partie latérale 30 doit provoquer un étalement horizontal du faisceau de virage Fv proportionnel à l'angle de virage av.

Selon le mode de réalisation représenté ici, la partie latérale 30 comporte, de droite à gauche en considérant la figure 3 :
- une portion latérale d'extrémité 36, dont l'axe optique E-E forme avec l'axe longitudinal B-B un angle déterminé qui est sensiblement égal à l'angle de virage maximal avₘₐₓ ;
- une première portion intermédiaire 38 qui est adjacente au côté gauche de la portion latérale d'extrémité 36 ;
- une deuxième portion intermédiaire 40 qui est adjacente d'un côté à la première portion intermédiaire 38, et de l'autre côté à la partie frontale 28.

La portion latérale d'extrémité 36 a ici la forme d'une demi-lentille plan-convexe du type sphérique.

On emploie ici l'expression « du type sphérique » pour désigner la forme générale de la lentille qui est globalement une forme de révolution.

La portion d'extrémité 36 comporte un bord demi-circulaire 42 qui est adjacent à la première portion intermédiaire 38, de sorte qu'il n'y ait pas de décrochement entre les surfaces de la portion d'extrémité 36 et celles de la première portion intermédiaire 38.

L'axe optique E-E de la portion d'extrémité 36 passe par le plan qui est défini par le bord demi-circulaire 42. Il correspond à l'axe optique de la lentille sphérique complète.

La première portion intermédiaire 38 a globalement la forme d'une lentille semi-cylindrique, l'axe du cylindre étant horizontal et perpendiculaire à l'axe optique E-E de la portion d'extrémité 36.

La face arrière d'entrée 44 de la première portion intermédiaire 38 est plane et elle prolonge la face arrière d'entrée 46 de la portion d'extrémité 36, vers la gauche en considérant la figure 3.

La face convexe de sortie 48 de la première portion intermédiaire 38 a un profil ondulé, dans un plan horizontal, comme on peut le voir sur la vue de dessus de la figure 3.

Ce profil ondulé provient du fait que le profil convexe de la première portion intermédiaire 38, en section par un plan vertical, évolue angulairement le long de la partie latérale 30, de manière que la largeur du faisceau de virage Fv augmente progressivement avec l'augmentation de l'angle de virage av depuis la position de repos.

Le profil ondulé doit aussi permettre un apport de lumière dans une zone à droite du faisceau de virage Fv, par exemple pour un angle de virage av compris entre dix et vingt degrés, et dans une zone à gauche du faisceau de virage Fv, par exemple pour un angle de virage av compris entre vingt et trente degrés.

La deuxième portion intermédiaire 40 est ici conformée en lentille semi-cylindrique, dans le prolongement de la partie frontale 28.

La face arrière d'entrée 50 de la deuxième portion intermédiaire 40 est donc plane, et elle prolonge la face arrière d'entrée 32 de la partie frontale 28, vers la droite en considérant la figure 3.

Le profil de la deuxième portion intermédiaire 40, en section par un plan vertical, évolue angulairement le long de la partie latérale 30, de manière que la largeur du faisceau de virage Fv augmente progressivement avec l'augmentation de l'angle de virage av depuis la position de repos.

La deuxième portion intermédiaire 40 est formée de plusieurs tronçons élémentaires 52 de lentille cylindrique qui ont chacun une face de sortie convexe 54 inclinée, dans un plan horizontal, par rapport à la face de sortie 34 de la partie frontale 28.

L'inclinaison de la face de sortie 54 de chaque tronçon élémentaire 52 est telle que cette face de sortie 54 soit sensiblement orthogonale à l'angle de virage av associé, c'est à dire l'angle d'attaque de l'axe optique mobile D-D sur la face d'entrée 50 dudit tronçon élémentaire 52.

Sur la figure 3, pour faciliter la compréhension de l'invention, on a représenté un nombre déterminé de tronçons élémentaires 52 et on a exagéré graphiquement l'importance du décalage entre deux faces de sortie 54 adjacentes, ce qui forme un profil en dents de scie. En réalité, il est préférable de réaliser la portion intermédiaire 40 avec une infinité de tronçons élémentaires 52, de sorte que la valeur de l'inclinaison des faces de sortie 54 évolue sensiblement de manière continue, de la gauche vers la droite en considérant la figure 3.

La première 38 et la deuxième 40 portions intermédiaires définissent entre elles un plan de joint 56 qui est globalement vertical et qui contient un angle de virage av déterminé.

Avantageusement, l'élément de lentille 26 est réalisé par moulage en deux pièces qui sont par exemple assemblés par collage. Une première pièce est constituée de la partie frontale 28 et de la deuxième portion intermédiaire 40, une deuxième pièce est constituée de la portion d'extrémité 36 et de la première portion intermédiaire 38.

Cette conception en deux pièces est plus facile à démouler, ce qui diminue le coût de fabrication de l'élément de lentille 26.

De manière générale, on constate que la partie latérale 30 de l'élément de lentille 26 définit une série d'axes optiques élémentaires qui s'inclinent progressivement vers la droite, par rapport à l'axe longitudinal de référence B-B, en suivant globalement l'évolution angulaire de l'axe optique mobile D-D du réflecteur 20.

Avantageusement, on réalise des stries 72 dans des zones adéquates de la surface convexe 48, 54 des portions intermédiaires 38, 40 de la partie latérale 30 de l'élément de lentille 26. Ces stries 72 permettent de modifier localement le trajet des rayons lumineux, en vue répartir l'énergie lumineuse dans le faisceau de virage Fv de façon homogène et optimale.

Les stries 72 sont par exemple des prismes ou sillons dont la forme et la position sont calculées par l'intermédiaire d'un logiciel.

On décrira maintenant le cache 24 qui est prévu pour former une coupure dans le faisceau d'éclairage produit par le projecteur additionnel 18.

Le cache 24 vise à faire obstacle aux rayons lumineux qui seraient émis par le projecteur 18 au-dessus de la ligne d'horizon à l'avant du véhicule 10.

Le cache 24 comporte principalement deux plaques parallèles verticales rectangulaires 58, 60 identiques, qui sont agencées l'une derrière l'autre suivant l'axe longitudinal B-B, et qui sont globalement alignées longitudinalement.

Chaque plaque 58, 60 comporte :
- une partie frontale 62 qui est sensiblement orthogonale à l'axe longitudinal B-B et qui est agencée globalement dans le plan focal de la partie frontale 28 de l'élément de lentille 26 ; et
- une partie latérale 64 qui est conformée de manière qu'elle soit sensiblement orthogonale à au moins un axe optique de la partie latérale 30 de l'élément de lentille 26.

La partie latérale 64 forme une arête 65 avec la partie frontale 62, au niveau de l'angle de virage av correspondant au plan de joint.

La partie latérale 64 comporte ici un premier tronçon 66, qui s'étend depuis l'arête jusqu'à l'axe optique E-E de la portion d'extrémité 36 de l'élément de lentille 26 et qui est sensiblement parallèle à la face d'entrée 44 de la première portion intermédiaire 38 de l'élément de lentille 26.

La partie latérale 64 comporte un deuxième tronçon 68 qui s'étend depuis l'axe optique E-E de la portion d'extrémité 36 vers la droite, en considérant la figure 3, et qui est recourbé vers l'élément de lentille 26, de sorte que le profil formé par ce deuxième tronçon 68, en section par un plan horizontal, soit globalement contenu dans le plan focal de la portion d'extrémité 36 qui suit généralement un profil recourbé.

L'utilisation de deux plaques parallèles 58, 60 pour réaliser le cache 24 sert à donner de l'épaisseur au cache 24, en vue de compenser les variations de la valeur de la distance focale en fonction de la position angulaire du réflecteur 20.

En variante (non représentée), on peut remplacer les deux plaques 58, 60 du cache 24 par une seule plaque plus épaisse.

Si l'on utilise une seule plaque 58 peu épaisse, l'image de la coupure formée par le bord supérieur du cache 24 peut manquer de netteté.

Avantageusement, le cache 24 comporte aussi une partie haute, sous la forme d'une plaque verticale rectangulaire additionnelle 70 qui est agencée ici dans le même plan que la partie frontale 62 de la plaque arrière 58, au-dessus de celle-ci.

Ainsi, le bord inférieur de la plaque additionnelle 70 délimite avec le bord supérieur de la partie frontale 62 une « fenêtre » de hauteur déterminée pour le passage des rayons lumineux émis par la source 22.

La fonction de la plaque additionnelle 70 est de diminuer la hauteur du faisceau d'éclairage produit par le projecteur 18 dans la direction longitudinale. En particulier, la plaque additionnelle 70 vise à diminuer la quantité de lumière proche, c'est à dire la lumière émise au sol près du véhicule 10, lorsque le réflecteur 20 occupe sa position de repos et que le projecteur 18 réalise un faisceau d'autoroute Fa.

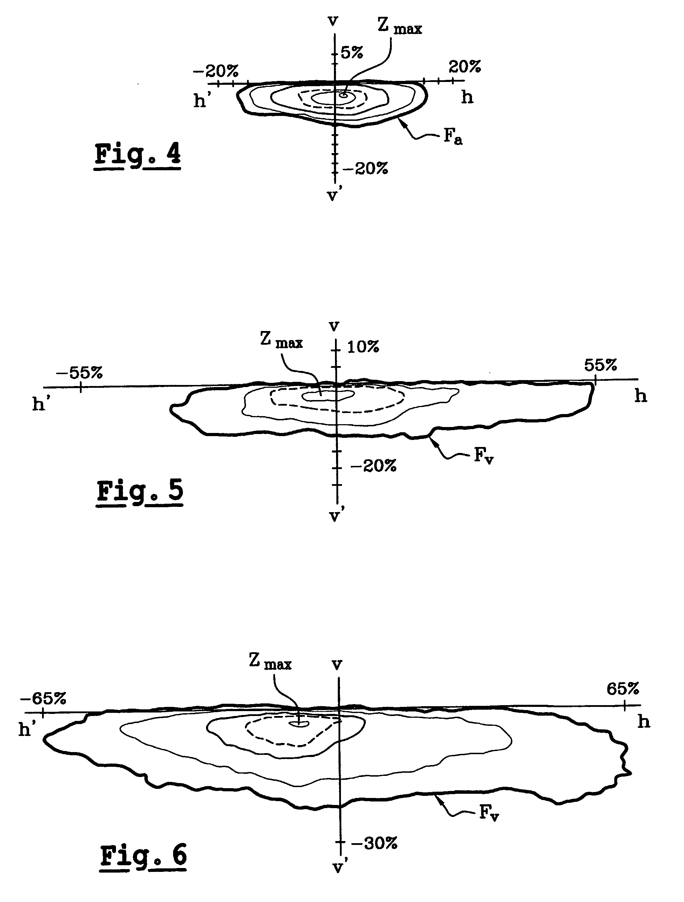

On décrira maintenant le fonctionnement des projecteurs additionnels 18 du véhicule 10, notamment en référence aux figures 4 à 6.

Les schémas des figures 4 à 6 illustrent la répartition de l'énergie lumineuse sur un écran placé à vingt-cinq mètres à l'avant du véhicule 10.

On note que les projecteurs additionnels 18 sont prévus pour fonctionner simultanément avec les projecteurs de feux de croisement 16 du véhicule 10. On considère donc que pour toutes les fonctions d'éclairage, les projecteurs de feux de croisement 16 sont allumés.

Lorsque le véhicule 10 circule globalement en ligne droite, le réflecteur 20 occupe sa position angulaire de repos.

Si le véhicule 10 circule sur une autoroute, les projecteurs additionnels 18 des deux blocs optiques 12, 14 sont allumés aussi. Ils réalisent alors chacun un faisceau d'éclairage additionnel, ou faisceau d'autoroute Fa. Le faisceau d'autoroute Fa produit par le projecteur additionnel 18 du bloc optique droit 14 est illustré par des courbes isolux sur la figure 4.

Sur la figure 4, on constate que ce faisceau d'éclairage Fa est globalement centré sur l'axe vertical v'v et il forme une coupure nette sur l'axe horizontal h'h.

La zone d'éclairage maximal Zmax est ici légèrement décalée à droite de l'axe vertical v'v. Ce décalage est compensé par le faisceau d'autoroute Fa (non représenté) produit par le projecteur additionnel 18 du bloc optique gauche 12, dont la zone d'éclairage maximal Zmax est décalée symétriquement à gauche de l'axe v'v, de sorte que le faisceau d'autoroute Fa global, formé par la superposition des faisceaux d'autoroute Fa des deux projecteurs additionnels 18, est centré sur l'axe vertical v'v.

Lorsque le véhicule 10 circule ailleurs que sur des autoroutes, et qu'il aborde un virage, par exemple orienté vers la droite, l'angle de braquage des roues augmente à partir de zéro. Le projecteur additionnel 18 du bloc optique droit 14 est allumé et le réflecteur 20 pivote proportionnellement à l'angle de braquage, formant ainsi un angle de virage av par rapport à l'axe longitudinal de référence B-B.

Le faisceau de virage Fv20 produit par ce projecteur additionnel 18, pour un angle de virage av d'environ vingt degrés, est illustré par les courbes isolux de la figure 5. On note que, sur la figure 5, l'axe v'v est décalé de vingt degrés vers la droite par rapport à l'axe longitudinal B-B, alors que sur la figure 4, l'axe v'v est perpendiculaire à l'axe longitudinal B-B.

On constate que le faisceau de virage Fv20 est beaucoup plus étalé en largeur que le faisceau d'autoroute Fa, notamment vers la droite par rapport à l'axe vertical v'v, alors que la zone d'éclairage maximal Zmax est globalement centrée sur l'axe vertical v'v.

De manière similaire, le faisceau de virage Fv40 produit par le projecteur additionnel 18, pour un angle de virage av d'environ quarante degrés, est illustré par les courbes isolux de la figure 6, l'axe vertical v'v étant décalé de quarante degrés vers la droite par rapport à l'axe longitudinal B-B.

On constate ici un étalement encore plus grand du faisceau Fv40 en largeur, avec un léger décalage de la zone d'éclairage maximal Zmax vers la gauche, par rapport à l'axe vertical v'v, et le faisceau Fv40 est aussi plus étalé en hauteur.

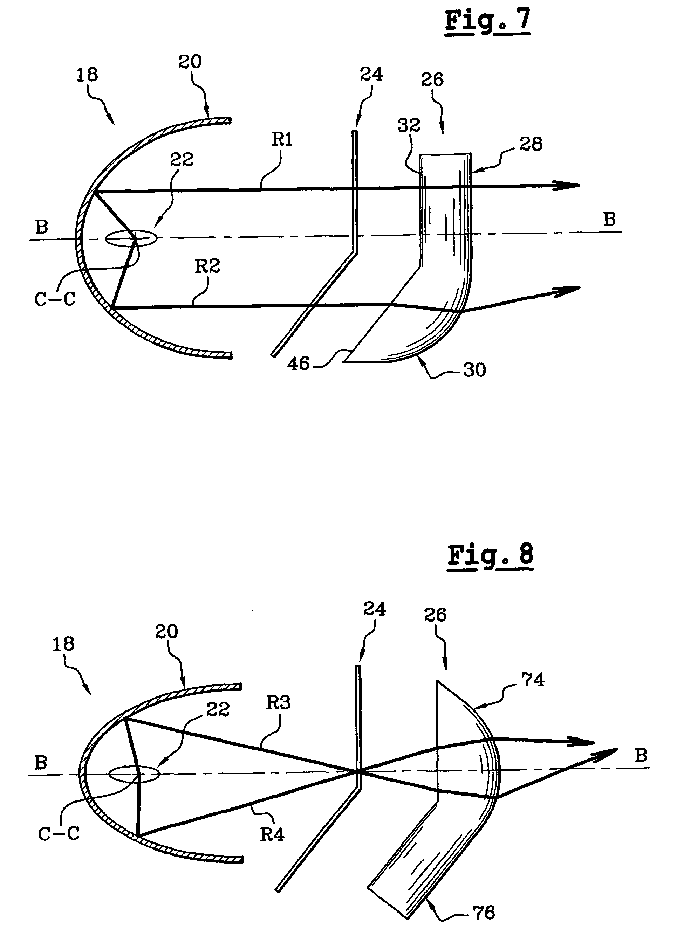

La figure 7 illustre schématiquement le fonctionnement du projecteur additionnel 18 lorsqu'il réalise un faisceau d'autoroute Fa.

On constate que, dans un plan horizontal passant par les axes optiques de l'élément de lentille 26, le réflecteur 20 ayant un profil parabolique, les rayons lumineux R1, R2, qui sont émis par la source 22 vers le réflecteur 20, se réfléchissent vers l'élément de lentille 26 suivant une direction sensiblement parallèle à l'axe longitudinal B-B.

Les rayons R1 qui atteignent la face arrière 32 de la partie frontale 28 ne sont pas déviés par l'élément de lentille 26.

Les rayons R2 qui atteignent la face arrière 46 de la partie latérale 30 sont déviés vers l'axe longitudinal B-B.

Selon une variante de réalisation de l'invention, qui est représentée sur la figure 8, la partie frontale 74 de l'élément de lentille 26 est conformée en demi-lentille du type sphérique, et la partie latérale 76 est conformée en lentille semi-cylindrique.

Avec une telle forme de l'élément de lentille 26, pour que la largeur du faisceau de virage Fv augmente avec l'angle de virage av, il est nécessaire de prévoir un réflecteur 20 dont la génératrice horizontale et la génératrice verticale sont globalement elliptiques.

Ainsi, l'imagerie du faisceau lumineux Fa dans l'axe A-A du véhicule 10 est optimisée et l'imagerie du faisceau de virage Fv sur le côté se répartie latéralement.

Le fonctionnement du projecteur 18 selon cette variante de réalisation est illustré par la figure 8.

On constate que, dans un plan horizontal passant par les axes optiques de l'élément de lentille 26, le réflecteur 20 ayant un profil elliptique, les rayons lumineux R3, R4, qui sont émis par la source 22 vers le réflecteur 20, se réfléchissent en convergeant vers le second foyer de l'ellipse formée par le réflecteur 20. Les rayons R3, R4 atteignent donc les faces arrière d'entrée de l'élément de lentille 26 avec des angles d'inclinaison déterminés, de sorte que ces rayons R3, R4 sont déviés par la partie frontale 74 et la partie latérale 76 de l'élément de lentille 26 vers l'axe longitudinal B-B.

## Revendications

1. Projecteur d'éclairage (18) de véhicule automobile (10) qui est conçu pour réaliser au moins un faisceau d'éclairage dit de virage (Fv) en vue d'améliorer l'éclairage lorsque le véhicule (10) aborde un virage, du type comportant un système optique qui comprend, agencés d'arrière en avant globalement suivant un axe longitudinal horizontal de référence (B-B), un réflecteur (20) du type elliptique, une source lumineuse (22) agencée au voisinage d'un premier foyer du réflecteur (20), et un élément de lentille convergente (26), du type dans lequel au moins le réflecteur (20) et la source lumineuse (22) sont montés pivotants autour d'un axe (C-C) sensiblement vertical, par rapport à un support fixe du véhicule (10), en fonction de l'angle de braquage des roues directrices du véhicule (10), définissant ainsi un axe optique mobile (D-D) par rapport à l'axe longitudinal (B-B),
l'élément de lentille (26) étant fixe par rapport au support, **caractérisé en ce que** l'élément de lentille (26) comporte une partie dite latérale (30), qui est agencée à côté de l'axe longitudinal (B-B), dans un secteur angulaire susceptible d'être balayé par l'axe optique mobile (D-D), et qui est conçue pour provoquer une modification du faisceau de virage (Fv) en fonction de l'angle de virage (av) que forme l'axe optique mobile avec l'axe longitudinal (B-B).

2. Projecteur (18) selon la revendication précédente, **caractérisé en ce que** l'élément de lentille (26) comporte une partie frontale (28) adjacente à la partie latérale (30), dont l'axe optique est sensiblement parallèle à l'axe longitudinal (B-B) et dont le plan focal est situé au voisinage du second foyer du réflecteur (20), lorsque le réflecteur (20) occupe sa position angulaire de repos, dans laquelle l'axe optique mobile (D-D) est sensiblement confondu avec l'axe longitudinal (B-B), de manière que le projecteur (18) puisse réaliser au moins un faisceau d'éclairage additionnel réglementaire, par exemple un faisceau d'éclairage (Fa) pour la circulation sur autoroute, lorsque le réflecteur (20) occupe sa position de repos.

3. Projecteur (18) selon l'une quelconque des revendications précédentes, **caractérisé en ce que** la partie latérale (30) de l'élément de lentille (26) comporte une portion latérale d'extrémité (36) dont l'axe optique (E-E) forme avec l'axe longitudinal (B-B) un angle déterminé qui est sensiblement égal à l'angle de virage maximal (avₘₐₓ).

4. Projecteur (18) selon la revendication précédente, **caractérisé en ce que** la partie latérale (36) de l'élément de lentille (26) comporte au moins une portion intermédiaire (38, 40) qui est adjacente à la portion latérale d'extrémité (36) et dont le profil convexe, en section par un plan vertical, évolue angulairement le long de la partie latérale (30), de manière que la largeur du faisceau de virage (Fv) augmente progressivement avec l'augmentation de l'angle de virage (av), depuis la position de repos.

5. Projecteur (10) selon l'une quelconque des revendications 3 ou 4 prise en combinaison avec la revendication 2, **caractérisé en ce que** la partie frontale (28) de l'élément de lentille (26) est une lentille semi-cylindrique d'axe sensiblement horizontal et la portion latérale d'extrémité (36) de la partie latérale (30) est une portion de lentille du type sphérique.

6. Projecteur (10) selon la revendication précédente, **caractérisé en ce que** le réflecteur (20) comporte une génératrice horizontale sensiblement parabolique et une génératrice verticale sensiblement elliptique.

7. Projecteur (10) selon l'une quelconque des revendications 3 ou 4 prise en combinaison avec la revendication 2, **caractérisé en ce que** la partie frontale (28) de l'élément de lentille (26) est une portion de lentille du type sphérique et la portion latérale d'extrémité (36) de la partie latérale (30) est une lentille semi-cylindrique d'axe sensiblement horizontal.

8. Projecteur (10) selon l'une quelconque des revendications 2 à 7, **caractérisé en ce qu'**il comporte un cache fixe (24) qui est agencé longitudinalement entre le réflecteur (20) et l'élément de lentille (26), et qui comprend :
- une partie frontale (62) qui est sensiblement orthogonale à l'axe longitudinal (B-B) et qui est agencée globalement dans le plan focal de la partie frontale (28) de l'élément de lentille (26) ;
et
- une partie latérale (64) qui est conformée de manière qu'elle soit sensiblement orthogonale à au moins un axe optique (E-E) de la partie latérale (30) de l'élément de lentille (26).

9. Projecteur (10) selon la revendication précédente, **caractérisé en ce que** le cache (24) comporte une partie supérieure (70) qui est agencée globalement dans le plan focal de la partie frontale (28, 74) de l'élément de lentille (26), et qui délimite avec la partie frontale (62) du cache (24) une fenêtre de passage des rayons lumineux, de manière à diminuer la lumière proche émise par le projecteur (18) sur la route, lorsque le réflecteur (20) occupe sa position angulaire de repos.

10. Projecteur selon l'une quelconque des revendications 8 ou 9, **caractérisé en ce que** la partie frontale (62) et la partie latérale (64) du cache (24) sont formées chacune par deux plaques (58, 60) globalement rectangulaires et parallèles, alignées longitudinalement.

## Patentansprüche

1. Scheinwerfer (18) eines Kraftfahrzeugs (10), der dazu ausgeführt ist, wenigstens ein so genanntes Kurvenlichtbündel (Fv) zu erzeugen, um die Ausleuchtung bei Einfahrt des Fahrzeugs (10) in eine Kurve zu verbessern, des Typs mit einem optischen System, das allgemein entlang einer horizontalen Längsbezugsachse (B-B) von hinten nach vorne angeordnet einen Ellipsoidreflektor (20), eine in der Nähe eines ersten Brennpunkts des Reflektors (20) angeordnete Lichtquelle (22) und ein Sammellinsenelement (26) aufweist, des Typs, bei dem wenigstens der Reflektor (20) und die Lichtquelle (22) bezüglich eines feststehenden Halters des Fahrzeugs (10) in Abhängigkeit vom Einschlagwinkel der Vorderräder des Fahrzeugs (10) um eine im Wesentlichen vertikale Achse (C-C) schwenkbar angebracht sind, wobei auf diese Weise eine bezüglich der Längsachse (B-B) bewegliche optische Achse (D-D) gebildet wird, wobei das Linsenelement (26) bezüglich des Halters feststehend ist,
**dadurch gekennzeichnet, dass** das Linsenelement (26) ein sogenanntes Seitenteil (30) umfasst, das neben der Längsachse (B-B) in einem Winkelbereich angeordnet ist, der durch die bewegliche optische Achse (D-D) überstrichen werden kann, und so ausgeführt ist, dass eine Veränderung des Kurvenlichtbündels (Fv) in Abhängigkeit vom Schwenkwinkel (av) bewirkt wird, den die bewegliche optische Achse mit der Längsachse (B-B) bildet.

2. Scheinwerfer (18) nach dem vorhergehenden Anspruch,
**dadurch gekennzeichnet, dass** das Linsenelement (26) ein an das Seitenteil (30) angrenzendes Frontteil (28) umfasst, dessen optische Achse im Wesentlichen parallel zur Längsachse (B-B) ist und dessen Brennebene in der Nähe des zweiten Brennpunkts des Reflektors (20) angeordnet ist, wenn sich der Reflektor (20) in seiner Winkelruhestellung befindet, in der die bewegliche optische Achse (D-D) im Wesentlichen mit der Längsachse (B-B) zusammenfällt, so dass der Scheinwerfer (18) wenigstens ein zusätzliches vorschriftsmäßiges Lichtbündel, zum Beispiel ein Lichtbündel (Fa) für Fahrten auf Autobahnen bilden kann, wenn sich der Reflektor (20) in seiner Ruhestellung befindet.

3. Scheinwerfer (18) nach einem der vorhergehenden Ansprüche,
**dadurch gekennzeichnet, dass** das Seitenteil (30) des Linsenelements (26) ein Seitenendstück (36) aufweist, dessen optische Achse (E-E) mit der Längsachse (B-B) einen bestimmten Winkel bildet, der im Wesentlichen dem größten Schwenkwinkel (avₘₐₓ) entspricht.

4. Scheinwerfer (18) nach dem vorhergehenden Anspruch,
**dadurch gekennzeichnet, dass** das Seitenteil (30) des Linsenelements (26) wenigstens ein Zwischenstück (38, 40) aufweist, das an das Seitenendstück (36) angrenzt und dessen im Querschnitt durch eine Vertikalebene konvexes Profil sich entlang des Seitenteils (30) derart verändert, dass die Breite des Kurvenlichtbündels (Fv) ausgehend von der Ruhestellung allmählich mit der Zunahme des Schwenkwinkels (av) zunimmt.

5. Scheinwerfer (18) nach einem der vorhergehenden Ansprüche 3 oder 4 in Verbindung mit Anspruch 2,
**dadurch gekennzeichnet, dass** das Frontteil (28) des Linsenelements (26) eine halbzylindrische Linse mit einer im Wesentlichen horizontalen Achse ist, und das Seitenendstück (36) des Seitenteils (30) ein Stück einer Kugellinse ist.

6. Scheinwerfer (18) nach dem vorhergehenden Anspruch,
**dadurch gekennzeichnet, dass** der Reflektor (20) eine im Wesentlichen parabolische horizontale Erzeugende und eine im Wesentlichen elliptische vertikale Erzeugende aufweist.

7. Scheinwerfer (18) nach einem der vorhergehenden Ansprüche 3 oder 4 in Verbindung mit Anspruch 2,
**dadurch gekennzeichnet, dass** das Frontteil (28) des Linsenelements (26) ein Stück einer Kugellinse ist, und das Seitenendstück (36) des Seitenteils (30) eine halbzylindrische Linse mit im Wesentlichen horizontaler Achse ist.

8. Scheinwerfer (18) nach einem der Ansprüche 2 bis 7,
**dadurch gekennzeichnet, dass** er eine feststehende Abdeckkappe (24) aufweist, die zwischen dem Reflektor (20) und dem Linsenelement (26) in Längsrichtung angeordnet ist und die
- ein Frontteil (62), das im Wesentlichen orthogonal zur Längsachse (B-B) ist und allgemein in der Brennebene des Frontteils (28) des Linsenelements (26) angeordnet ist; und
- ein Seitenteil (64), das derart ausgebildet ist, dass es im Wesentlichen orthogonal zu wenigstens einer optischen Achse (E-E) des Seitenteils (30) des Linsenelements (26) ist,
umfasst.

9. Scheinwerfer (18) nach dem vorhergehenden Anspruch,
**dadurch gekennzeichnet, dass** die Abdeckkappe (24) einen oberen Teil (70) umfasst, der allgemein in der Brennebene des Frontteils (28, 74) des Linsenelements (26) angeordnet ist und mit dem Frontteil (62) der Abdeckkappe (24) ein Durchlassfenster für die Lichtstrahlen derart begrenzt, dass das vom Scheinwerfer (18) auf die Fahrbahn ausgesandte nahe Licht verringert wird, wenn sich der Reflektor (20) in seiner Winkelruhestellung befindet.

10. Scheinwerfer nach einem der Ansprüche 8 oder 9,
**dadurch gekennzeichnet, dass** das Frontteil (62) und das Seitenteil (64) der Abdeckkappe (24) jeweils aus zwei allgemein rechteckigen und zueinander parallelen Platten (58, 60) gebildet sind, die in Längsrichtung aneinander gereiht sind.

## Claims

1. A headlight (18) for a motor vehicle (10), which is designed to produce at least one illuminating beam referred to as a bend beam (Fv), for improving the lighting when the vehicle (10) is negotiating a bend, the headlight being of the type including an optical system which comprises, arranged in this order in a forward direction generally along a horizontal longitudinal reference axis (B-B), a reflector (20) of the elliptical type, a light source (22) arranged in the vicinity of a first focus of the reflector (20), and a convergent lens element (26), the headlight being further of the type in which at least the reflector (20) and the light source (22) are mounted for pivoting movement about a substantially vertical axis (C-C), with respect to a fixed support element of the vehicle (10) and as a function of the steering angle of the steerable road wheels of the vehicle (10), thereby defining an optical axis (D-D) which is movable in relation to the longitudinal axis (B-B), the lens (26) being fixed with respect to the support element, **characterised in that** the lens element (26) includes a portion referred to as a lateral portion (30), which is disposed beside the longitudinal axis (B-B), in an angular sector which is arranged to be swept by the movable optical axis (D-D), and which is adapted to cause the bend beam (Fv) to be modified as a function of the bend angle (av) defined between the movable optical axis and the longitudinal axis (B-B).

2. A headlight (18) according to Claim 1, **characterised in that** the lens element (26) includes a front portion (28) adjacent to the lateral portion (30), the optical axis of which is substantially parallel to the longitudinal axis (B-B), and the focal plane of which is situated in the vicinity of the second focus of the reflector (20), when the reflector (20) is occupying its angular rest position, in which the movable optical axis (D-D) is substantially coincident with the longitudinal axis (B-B), whereby the headlight (18) is able to produce at least one additional regulation light beam, for example an illuminating beam for motorway driving, when the reflector (20) is occupying its rest position.

3. A headlight (18) according to Claim 1 or Claim 2, **characterised in that** the lateral portion (20) of the lens element (26) includes a lateral end portion (36), the optical axis (E-E) of which defines, with the longitudinal axis (B-B), a predetermined angle which is substantially equal to the maximum bend angle (avmax).

4. A headlight (18) according to Claim 3, **characterised in that** the lateral portion (36) of the lens element (26) includes at least one intermediate portion (38, 40) which is adjacent to the lateral end portion (36) and which has, in dross section through a vertical plane, a convex profile which evolves angularly along the lateral portion (30), whereby the width of the bend beam (Fv) increases progressively as the bend angle (av) increases away from the rest position.

5. A headlight (10) according to Claim 3 or Claim 4 taken in combination with Claim 2, **characterised in that** the front portion (28) of the lens element (26) is a semi-cylindrical lens having a substantially horizontal axis, and the lateral end portion (36) of the lateral portion (30) is a lens portion of the spherical type.

6. A headlight (10) according to Claim 5, **characterised in that** the reflector (20) has a substantially parabolic horizontal generatrix and a substantially elliptical vertical generatrix.

7. A headlight (10) according to Claim 3 or Claim 4 taken in combination with Claim 2, **characterised in that** the front portion (28) of the lens element (26) is a lens portion of the spherical type, and the lateral end portion of the lateral portion (30) is a semi-cylindrical lens having a substantially horizontal axis.

8. A headlight (10) according to any one of Claims 2 to 7, **characterised in that** it includes a fixed mask (24) which is arranged longitudinally between the reflector (20) and the lens element (26), and which comprises:
- a front portion (62) which substantially orthogonal to the longitudinal axis (B-B), and which is arranged generally in the focal plane of the front portion (28) of the lens element (26); and
- a lateral portion (64) which is so configured that it is substantially orthogonal to at least one optical axis (E-E) of the lateral portion (30) of the lens element (26).

9. A headlight (10) according to Claim 8, **characterised in that** the mask (24) has an upper portion (70) which is arranged generally in the focal plane of the front portion (28, 74) of the lens element (26), and which delimits, with the front portion (62) of the mask (24), a window for passage of light rays through it, whereby to reduce the light emitted close up on the road by the headlight (18), when the reflector is occupying its angular rest position.

10. A headlight according to Claim 8 or Claim 9, **characterised in that** the front portion (62) and the side portion (64) of the mask (24) are each defined by two plates (58, 60) which are generally rectangular and parallel and aligned longitudinally.
